## Europäisches Patentamt

## European Patent Office

## Office européen des brevets

(19)

(11) **EP 1 203 869 B1**

(12) **EUROPÄISCHE PATENTSCHRIFT**

(45) Veröffentlichungstag und Bekanntmachung des Hinweises auf die Patenterteilung:
**21.08.2002 Patentblatt 2002/34**

(51) Int Cl.⁷: **F01N 9/00**

(21) Anmeldenummer: **00123961.5**

(22) Anmeldetag: **03.11.2000**

(54) **Regelungsanordnung und Verfahren zur Unterbrechung der Regeneration eines Partikelfilters eines Dieselmotors**

Control apparatus and method for interrupting regeneration of a particle filter of a Diesel engine

Appareil et procédé de commande pour l'interruption de la régénération d'un filtre à particules d'un moteur Diesel

(84) Benannte Vertragsstaaten:
**DE FR GB**
Benannte Erstreckungsstaaten:
**AL LT LV MK RO SI**

(43) Veröffentlichungstag der Anmeldung:
**08.05.2002 Patentblatt 2002/19**

(73) Patentinhaber: **Ford Global Technologies, Inc., A subsidiary of Ford Motor Company Dearborn, Michigan 48126 (US)**

(72) Erfinder:
• **Yasser, Mohamed Sayed Yacoub Junkersdorf, 50858 Köln (DE)**

• **Urs, Christen 52072 Aachen (DE)**
• **Moraal, Paul Eduard 6291 VP Vaals (NL)**

(74) Vertreter: **Drömer, Hans-Carsten, Dipl.-Ing. et al Ford-Werke Aktiengesellschaft, Patentabteilung NH/DRP 50725 Köln (DE)**

(56) Entgegenhaltungen:
• **Keine einschlägigen Dokumente gefunden**

**Beschreibung**

Die Erfindung betrifft ein Verfahren zur Unterbrechung der Regeneration eines Partikelfilters im Abgassystem eines Dieselmotors, wobei der Luftmassenstrom (MAF) und der Ansaugdruck (MAP) sensorisch erfasst und durch Betätigung eines Einlassdrosselventils und/oder eines Abgasrückführungsventils verändert werden. Ferner betrifft die Erfindung eine Regelungsanordnung zur Unterbrechung der Regeneration eines Partikelfilters im Abgassystem eines Dieselmotors mit einem Luftmassenstromsensor, mit einem Ansaugdrucksensor, mit einem Einlassdrosselventil in der Frischluftzufuhr zum Dieselmotor und mit einem Abgasrückführungsventil.

Zur Entfernung von Rußteilchen aus dem Abgasstrom eines Dieselmotors werden in der Regel Partikelfilter im Abgassystem des Motors angeordnet. Da sich im Laufe des Betriebs zunehmend Rückstände in einem solchen Partikelfilter ansammeln, müssen diese aus dem Filter entfernt werden, wenn die Filterbeladung eine vorgegebene Schwelle überschreitet. Für Personenkraftwagen ist hierzu das im Fahrzeug stattfindende Verfahren der Regeneration beziehungsweise Oxidation der einzig praktikable Ansatz. Dieses Verfahren wird durch eine Erhöhung der Abgastemperatur durchgeführt, um bei Anwesenheit einer ausreichenden Sauerstoffkonzentration die Verbrennung der angesammelten Partikelmasse zu ermöglichen.

Dabei muss die Filtertemperatur während der Regeneration unter einer kritischen Schwelle gehalten werden, um eine thermische Beschädigung des Filters zu vermeiden. Falls diese Schwelle dennoch überschritten wird, müssen Maßnahmen ergriffen werden, um den Regenerationsprozess so schnell wie möglich zu unterbrechen. Eine unkontrollierte Verbrennungsrate in einer "außer Kontrolle geratenen" Regeneration kann das Filtermaterial zum Schmelzen bringen. Eine solche Situation kann z.B. entstehen durch eine Überdrosselung des Lufteinlasses für längere Zeit, die von einem ungedrosselten Betrieb gefolgt wird. Der Anstieg der Sauerstoffversorgung initiiert in diesem Falle eine übermäßige Verbrennungsrate in dem überhitzten Filter.

Jedes Verfahren zur Unterbrechung der Regeneration hat zwei Ziele. Zum einen sollen alle Maßnahmen beendet werden, die zur Erhöhung der Abgastemperatur am Einlass des Filters ergriffen worden sind. Zum anderen soll die Sauerstoffversorgung im Gasstrom zum Filter möglichst stark auf einen durch die Stabilität des Verbrennungsprozesses im Motor vorgegebenen Grenzwert reduziert werden, so dass gleichzeitig ein ordnungsgemäßer Motorbetrieb aufrecht erhalten bleibt.

Zu den Schritten zur Erzielung des zuerst genannten Zieles sind folgende Maßnahmen zweckmäßig:

- Abschalten extern zugeschalteter elektrischer Lasten wie zum Beispiel eingeschalteter Glühkerzen;

- Deaktivieren einer Erhöhung der Leerlaufdrehzahl;

- Abschalten von Mitteln zur Reduzierung der Verbrennungseffizienz (zum Beispiel verzögerte Einspritzzeitsteuerung, Verringerung des Einspritzdruckes von Common-Rail Systemen);

- Abschalten von Mitteln zur Bereitstellung externer Wärmeenergie entweder im Einlassstrom oder im Abgasstrom oder in beiden Strömen (zum Beispiel externe Heizungen, Injektion von Kraftstoff entweder spät im Arbeitstakt - Nacheinspritzen für Common-Rail Systeme - oder in den Abgasstrom unter Verwendung eines zusätzlichen Injektors);

- Abschalten der Mittel zur Stimulation einer exothermen Reaktion in einem Oxidationskatalysator, der vor dem Partikelfilter angeordnet ist (d.h. Deaktivieren einer Erhöhung der Temperatur am Motorausgang, Erhöhung der Menge des unverbrannten Kraftstoffes im Abgasstrom).

Das zweite Ziel, die Reduktion der Sauerstoffzufuhr, kann durch eine Beeinflussung der Stellungen des Einlassdrosselventils und des Abgasrückführungsventils erreicht werden. Normalerweise ist während einer forcierten Regeneration das Abgasrückführungsventil vollständig geschlossen, um die Sauerstoffkonzentration im Abgas zu maximieren. Das Einlassdrosselventil wird während einer derartigen Regeneration zweckmäßigerweise bis zu einer Stellung geschlossen, die durch die Sauerstoffkonzentration im Abgasstrom stromabwärts des Oxidationskatalysators - falls ein solcher vorhanden ist - begrenzt ist, um eine Drosselungsbelastung sowie einen reduzierten Luftmassenstrom und dadurch eine Erhöhung der Motorausgangstemperatur zu erzielen.

Um den Regenerationsprozess möglichst schnell zu unterbrechen, muss das Luft-Kraftstoff-Verhältnis so dicht wie möglich an einen durch die Stabilität der Verbrennung vorgegebenen Grenzwert abgesenkt werden. Idealerweise geschieht das dadurch, dass das Abgasrückführungsventil vollständig geöffnet und die Drosselklappe so wenig wie möglich geschlossen wird, wobei das Regelungsziel darin besteht, den Massenstrom aus stöchiometrischer Verbrennung durch den Partikelfilter zu maximieren. Eine solche Regelungsaktion muss jedoch sorgfältig koordiniert werden, um ein Fluten des hocherhitzten Filtermaterials mit an Sauerstoff reichem Abgas zu vermeiden, falls das Einlassdrosselventil plötzlich geöffnet würde.

Aus der US 42 11 075 ist die Verwendung eines Einlassdrosselventils zur Kontrolle des Anstiegs der Temperatur in einem Partikelfilter sowie der sofortige Abbruch des Regenerationsprozesses bekannt, wenn die Filtertemperatur eine vorgegebene Grenze überschreitet. Für die sofortige Beendigung der Regeneration wird jedoch als Mittel nur das langsame Öffnen des Einlassdrosselventils zur Reduzierung der Abgastemperatur genannt.

In der US 47 47 264 ist eine Schutzfunktion beschrieben, bei der das Einlassdrosselventil dann vollständig geschlossen wird, wenn der Temperaturanstieg über den Partikelfilter eine bestimmte Schwelle überschreitet.

Die US 50 42 248 beschäftigt sich mit dem Problem einer erhöhten Sauerstoffkonzentration beim Verzögern während eines Regenerationsprozesses unter verhältnismäßig hoher Motorbelastung. Sobald das Verzögern detektiert wird, wird ein Einlassdrosselventil in die maximal zulässige geschlossene Position bewegt, um die Sauerstoffkonzentration im Abgas zu begrenzen. Dieser Aktion folgt ein langsames Rückkehren des Einlassdrosselventils in die geöffnete Position. Im Falle einer plötzlichen Beschleunigungsanforderung oder eines Abfalls der Motordrehzahl unter eine vorgegebene Schwelle wird das Motordrosselventil abrupt in seine vollständig geöffnete Position überführt.

In der US 56 01 068 wird eine Strategie zur Koordination der Verwendung des Einlassdrosselventils und des Abgasrückführungsventils beschrieben, um die Versorgung von Sauerstoff in der Verbrennungskammer zu kontrollieren. Eine ausreichende Berücksichtigung der wechselseitigen Kopplungen zwischen den verwendeten Aktuatoren und den kontrollierten Parametern erfolgt jedoch nicht.

Im Patent Abstract JP 60090931 wird unter Verwendung eines Einlassdrosselventils die Versorgung mit Frischluft dann begrenzt, wenn eine Filtertemperatur oberhalb einer vorgegebenen Grenze detektiert wird.

Gemäß Patent Abstract JP 01087820 ist ein Sauerstoffsensor vorgesehen, der an der Einlassseite des Partikelfilters angeordnet ist, und dazu vorgesehen ist, die Verbrennungsrate der Partikel und damit den Temperaturanstieg im Filter durch eine Einlassdrosselung zu kontrollieren.

Gemäß den Patent Abstracts JP 05133285 und JP 05106518 wird ein Einlassdrosselventil und ein Abgasrückführungsventil eingesetzt, um die Filterregeneration zu kontrollieren. Während der Regeneration wird die Menge des rezirkulierten Abgases im Vergleich zu dem Zeitpunkt ohne Regeneration reduziert. Wenn während der Regeneration verzögert wird, wird das Abgasrückführungsventil vollständig geöffnet, während die Frischluft gedrosselt wird. Hierdurch wird der Sauerstoffgehalt im Abgasstrom weiter reduziert.

Vor diesem Hintergrund war es Aufgabe der vorliegenden Erfindung, ein Verfahren und eine Regelungsanordnung der eingangs genannten Art so zu verbessern, dass eine koordinierte Kontrolle zwischen den wechselseitig voneinander abhängigen Größen erfolgt, so dass eine Unterbrechung der Regeneration des Partikelfilters möglich ist, bevor dieser durch eine übermäßige Verbrennungsrate zerstört wird. Ein wichtiger Aspekt ist dabei die Begrenzung der Sauerstoffkonzentration im Abgasstrom.

Diese Aufgabe wird durch ein Verfahren mit den Merkmalen des Anspruchs 1 und eine Regelungsanordnung mit den Merkmalen des Anspruchs 11 gelöst. Vorteilhafte Ausgestaltungen sind in den Unteransprüchen enthalten.

Das Verfahren dient dazu, die Regeneration eines im Abgassystem eines Dieselverbrennungsmotors angeordneten Partikelfilters zu unterbrechen, falls dies erforderlich ist. Bei dem Verfahren werden der Massenstrom der dem Motor zugeführten Frischluft sowie der Ansaugdruck im Ansaugkrümmer sensorisch erfasst. Über eine Betätigung des Einlassdrosselventils, das in der Frischluftzufuhr zum Motor angeordnet ist, und/oder des Abgasrückführungsventils wird dann Einfluss auf das Motorverhalten und die Abgaszusammensetzung genommen. Dabei wird

a) das Abgasrückführungsventil so geregelt, dass ein vorgegebener Wert für den Luftmassenstrom eingehalten wird;

b) das Einlassdrosselventil so geregelt, dass ein vorgegebener Wert für den Ansaugdruck eingehalten wird,
wobei

c) der in b) vorgegebene Ansaugdruck sich als Summe des von der Motorsteuerung berechneten Basisansaugdrucks und einer Druckkorrektur berechnet, wobei die Druckkorrektur von der Differenz zwischen dem vorgegebenen Luftmassenstrom und dem gemessenen Wert des Luftmassenstroms abhängt.

Durch das erfindungsgemäße Verfahren wird eine koordinierte Verwendung der Aktuatoren, das heißt des Abgasrückführungsventils und des Einlassdrosselventils, erreicht. Diese Koordination erfolgt insbesondere dadurch, dass in Schritt c) eine Druckkorrektur berechnet wird, die vom angestrebten Luftmassenstrom abhängt. Die Regelung des Einlassdrosselventils, die zur Verfolgung eines vorgegebenen Ansaugdruckes dient, erfolgt somit nicht losgekoppelt vom Luftmassenstrom, sondern vielmehr unter Berücksichtigung der dort vorgegebenen und aktuell vorliegenden Werte.

Die Unterbrechung der Regeneration im Partikelfilter erfolgt in der Regel zu dem Zweck, eine Zerstörung des Partikelfilters durch zu hohe Temperaturen zu vermeiden. Aus diesem Grunde wird das erfindungsgemäße Verfahren vorzugsweise bei Überschreiten einer vorgegebenen Temperaturschwelle im Partikelfilter initiiert. Ebenso sind jedoch auch andere Konstellationen denkbar, bei denen ein Start des Verfahrens sinnvoll sein kann.

Der in Schritt a) verwendete vorgegebene Wert des Luftmassenstroms wird vorteilhafterweise in Abhängigkeit von der Motordrehzahl, der Kraftstoffzufuhr und/oder dem gewünschten Luft-Kraftstoff-Verhältnis berechnet. Bei dieser Berechnung können die üblichen und an sich bekannten Prinzipien der Motorsteuerung berücksichtigt werden.

Die Verfolgung des vorgegebenen Luftmassenstroms in Schritt a) kann grundsätzlich durch jeden dafür geeigneten Regelungsalgorithmus erfolgen. Vorzugsweise erfolgt die Berechnung der Stellsignale für das Abgasrückführungsventil in Schritt a) auf der Basis der Differenz zwischen dem vorgegebenen Luftmassenstrom und dem gemessenen Luftmassenstrom. Diese Differenz stellt ein Fehlersignal dar, welches der Regelungsalgorithmus durch Abgabe geeigneter Stellsignale möglichst dicht beim Wert Null zu halten hat.

Dabei kann die Berechnung der Stellsignale für das Abgasrückführungsventil vorzugsweise nach Art eines Integralreglers erfolgen. Besonders bevorzugt ist es, wenn dieser eine "antiwindup" Eigenschaft aufweist.

Auch für die Verfolgung des vorgegebenen Ansaugdruckes in Schritt b) kommen grundsätzlich alle dafür geeigneten Regelalgorithmen in Frage. Vorzugsweise werden die Stellsignale für das Einlassdrosselventil in Schritt b) jedoch aus der Differenz zwischen dem vorgegebenen Ansaugdruck und dem gemessenen Ansaugdruck berechnet. Auch hier stellt die Differenz somit ein Fehlersignal dar, welches vom Regler möglichst nahe bei Null zu halten ist. Dabei kann die Berechnung der Stellsignale für das Einlassdrosselventil vorzugsweise nach Art eines Integralreglers erfolgen.

Die Druckkorrektur, welche im Schritt c) bei der Berechnung des vorgegebenen Ansaugdruckes verwendet wird, enthält vorzugsweise das zeitliche Integral einer monoton steigenden, vorzugsweise nichtlinearen Funktion der Differenz zwischen dem vorgegebenen Luftmassenstrom und dem gemessenen Luftmassenstrom. Durch die monoton steigende Funktion können insbesondere die hohen Abweichungen des Luftmassenstroms vom Sollwert stärker gewichtet werden. Durch die Berücksichtigung des Luftmassenstrom-Fehlers wird gewährleistet, dass das Einlassdrosselventil und damit der Ansaugdruck nicht unabhängig vom Luftmassenstrom angesteuert wird.

Bei der zuletzt genannten Art der Berechnung der Druckkorrektur wird die dort genannte Funktion vor der Integration vorzugsweise noch mit einem Faktor multipliziert, welcher dem Öffnungsgrad des Abgasrückführungsventils proportional ist. Vorzugsweise variiert dieser Faktor zwischen dem Wert 0 für das vollständig geschlossene Abgasrückführungsventil und dem Wert 1 für das vollständig geöffnete Abgasrückführungsventil.

Weiterhin kann der Term der Druckkorrektur das zeitliche Integral einer monoton auf den Wert Null fallenden Funktion eines Faktors enthalten, welcher dem Öffnungsgrad des Abgasrückführungsventils proportional ist. Dabei kann es sich um den zuvor genannten Faktor handeln, welcher vorzugsweise zwischen dem Wert 0 für ein vollständig geschlossenes Abgasrückführungsventil und dem Wert 1 für ein vollständig geöffnetes Abgasrückführungsventil variiert. Die erwähnte monoton fallende Funktion nimmt dabei bei vollständiger Öffnung des Abgasrückführungsventils den Wert Null an. Die Einführung des genannten Integrales sorgt dafür, dass eine kontinuierliche Tendenz besteht, das Abgasrückführungsventil zu öffnen, solange es noch nicht seine vollständig offene Position erreicht hat.

Die Erfindung betrifft ferner eine Regelungsanordnung zur Unterbrechung der Regeneration eines Partikelfilters im Abgassystems eines Diesel-Verbrennungsmotors. Der Verbrennungsmotor weist hierzu einen Luftmassenstromsensor im Luft-Einlasskanal, einen Ansaugdrucksensor im Ansaugkrümmer, ein Einlassdrosselventil in der Frischluftzufuhr zum Dieselmotor und ein Abgasrückführungsventil in der Abgasrückführung vom Abgaskrümmer zum Ansaugkrümmer auf. Die Regelungsanordnung enthält ferner

a) einen Luftmassenstromregler zur Verfolgung eines vorgegebenen Luftmassenstroms, wobei der Regler im Betriebszustand ausgangsseitig mit dem Abgasrückführungsventil verbunden ist;

b) einen Ansaugdruckregler zur Verfolgung eines vorgegebenen Ansaugdruckes, wobei der Ansaugdruckregler im Betriebszustand ausgangsseitig mit dem Einlassdrosselventil verbunden ist, und

c) ein Koordinationsmodul, welches den vorgegebenen Ansaugdruck für den Ansaugdruckregler als Summe des von der Motorsteuerung berechneten Basisansaugdrucks und einer Druckkorrektur berechnet, wobei die Druckkorrektur von der Differenz zwischen vorgegebenem Luftmassenstrom und gemessenem Luftmassenstrom abhängt.

Die erfindungsgemäße Regelungsanordnung kann bei einem Dieselmotor das oben erläuterte Verfahren zur Unterbrechung der Regeneration des Partikelfilters ausführen, wobei durch eine koordinierte Kontrolle der Variablen ein Schutz des Partikelfilters vor Überhitzung sichergestellt wird. Vorteilhafterweise ist die Regelungsanordnung dabei so eingerichtet und so mit Sensoren beziehungsweise Aktuatoren des Dieselmotors verbunden, dass sie eine oder mehrere Varianten des erläuterten Verfahrens ausführen kann.

Im Folgenden wird die Erfindung anhand der Figuren beispielhaft näher erläutert. Es zeigen:

Fig. 1 die für die vorliegende Erfindung wesentlichen Teile eines Dieselmotors;

Fig. 2 ein Blockdiagramm der koordinierten Kontrolle von Luftmassenstrom und Ansaugdruck;

Fig. 3     ein Blockdiagramm des Koordinationsmoduls von Figur 2;

Fig. 4     Messergebnisse bei einer Regelung mit der erfindungsgemäßen Regelungsanordnung.

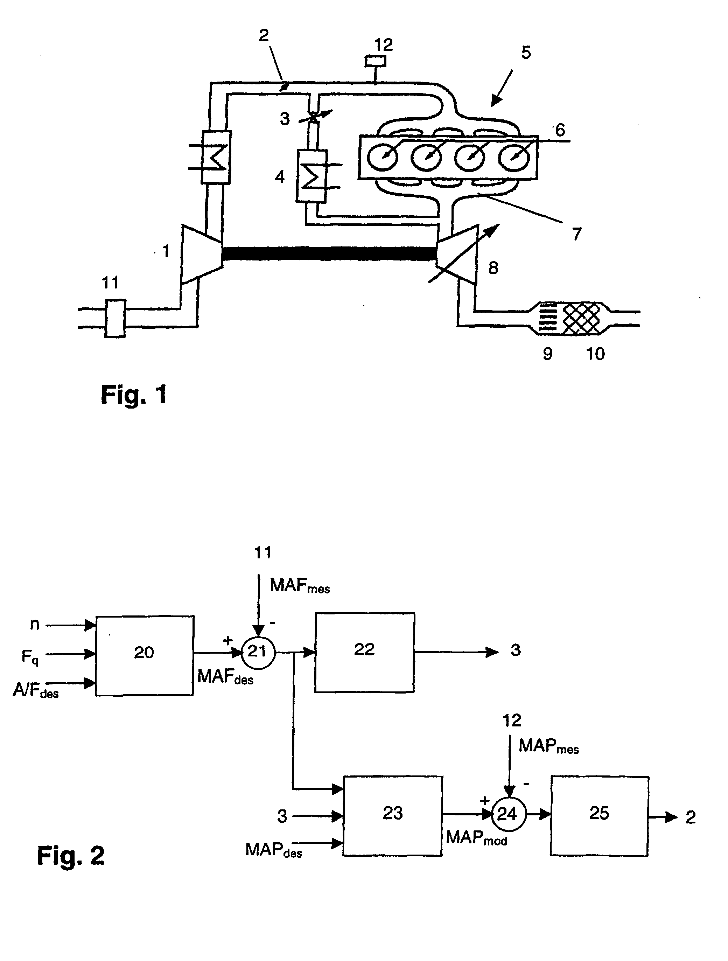

In Figur 1 sind die für die vorliegende Erfindung wesentlichen Komponenten eines Dieselmotors schematisch dargestellt. Über einen Kompressor 1 1 wird Luft angesaugt und verdichtet dem Dieselmotor 5 über dessen Ansaugkrümmer zur Verfügung gestellt. Im Luftweg vom Kompressor 1 zum Dieselmotor 5 befindet sich eine Einlassdrossel 2. In die Zylinder des Dieselmotors 5 wird über Kraftstoffinjektoren 6 Kraftstoff eingespritzt und zusammen mit der Luft verbrannt. Die dabei entstehenden Abgase verlassen den Dieselmotor über den Abgaskrümmer 7.

Ein Teil dieser Abgase wird über eine Abgasrückführung zur Eingangsseite des Dieselmotors zurückgeführt. Diese Abgasrückführung führt möglicherweise über einen AGR-Kühler 4 sowie ein AGR-Ventil 3. Über das Ventil 3 kann das Ausmaß der Abgasrückführung kontrolliert werden.

Der nicht rückgeführte Teil der Abgase strömt über eine Turbine 8, möglicherweise mit variabler Geometrie (VTG), welche durch den Abgasstrom in Drehung versetzt wird und ihrerseits den Kompressor 1 antreibt. Die Abgase fließen dann weiter in eine Abgasreinigungeinrichtung, welche aus einem Oxidationskatalysator 9 und einem in Strömungsrichtung dahinter gelegenen Partikelfilter 10 besteht.

Im Lufteinlass vor dem Kompressor 1 ist ein Luftmassenstromsensor 11 angeordnet. Ein Ansaugdrucksensor 12 befindet sich im Ansaugkrümmer des Dieselmotors 5.

Zur Reinigung des Partikelfilters 10 von Kohlenstoffrückständen ist es bekannt, die Abgastemperatur so weit zu erhöhen, dass die Rückstände verbrennen. Für die Erhöhung der Abgastemperatur kommen im Wesentlichen drei Maßnahmen in Frage. Hierzu gehört zum einen die Reduzierung des Gasstromes durch den Motor, wodurch weniger Luft mit einer gegebenen Menge an während der Verbrennung freigesetzter Wärme erhitzt wird. Zweitens kann die Motoreffizienz verringert werden, so dass mehr Energie für dieselbe mechanische Leistung verbraucht wird. Drittens können unverbrannte Kohlenwasserstoffe bereitgestellt werden, welche im Katalysator 9 unter exothermer Wärmeerzeugung umgewandelt werden.

Das Ziel der erfindungsgemäßen Verfahrens besteht darin, den Regenerationsprozess in dem Partikelfilter 10 zu unterbrechen, wenn dies zum Schutze des Filters vor Überhitzung notwendig ist. Hierzu wird durch die Sensoren 11 und 12 der Luftmassenstrom bzw. der Gasdruck im Einlasskrümmer stromabwärts des Einlassdrosselventils 2 gemessen. Weiterhin wird die Position des Abgasrückführungsventils 3 sensorisch erfasst. Zu den im Rahmen des Verfahrens beeinflußten Aktuatoren gehört das Einlassdrosselventil 2 und das Abgasrückführungsventil 3.

Figur 2 zeigt schematisch die erfindungsgemäße Regelungsanordnung. Diese besteht im Wesentlichen aus vier Subsystemen, nämlich einem Generator 20 für einen vorgegebenen Wert des Luftmassenstroms $MAF_{des}$, einem Luftmassenstromregler 22, einem Ansaugdruckregler 25 und einem Koordinationsmodul 23.

Vom Generator 20 wird ein gewünschter Luftmassenstrom $MAF_{des}$ auf der Basis des angestrebten Luft-Kraftstoff-Verhältnisses $A/F_{des}$, der injizierten Kraftstoffmenge $F_q$ und der Motordrehzahl n erzeugt. Bei einem transienten Betrieb muss zusätzlich eine Schätzung des Abgasrückführungsflusses durchgeführt werden, um den Sauerstoffgehalt in dem rezirkulierten Gas zu berücksichtigen.

Der Luftmassenstromregler 22 reagiert auf ein Fehlersignal, welches im Summierer 21 durch Differenzbildung zwischen dem vorgegebenen Luftmassenstrom $MAF_{des}$ und dem gemessenen Luftmassenstrom $MAF_{mes}$ gebildet wird. Der Regelungsalgorithmus kann dabei einen Integralregler mit einer anti-windup-Eigenschaft implementieren, d.h., dass unerwünschte Reaktionen aufgrund von Stellgrößenbeschränkungen durch eine Reduktion des Integralanteils des Reglers bei großen Regeldifferenzen vermieden werden. Um eine schnelle Reaktion zu ermöglichen, werden ferner vorzugsweise ein Vorsteuerungs-Term und ein nichtlinearer Integral-Gewichtungsfaktor verwendet (der eine Funktion des Luftmassenstrom-Fehlers ist). An seinem Ausgang gibt der Luftmassenstromregler 22 ein Stellsignal für das Abgasrückführungsventil 3 ab.

Der Ansaugdruckregler 25 wirkt in Reaktion auf die Differenz zwischen dem gewünschten Ansaugdruck $MAP_{mod}$ und dem gemessenen Ansaugdruck $MAP_{mes}$ über ein Stellsignal auf das Einlassdrosselventil 2 ein. Die genannte Differenz wird im Summierer 24 berechnet und dann dem Ansaugdruckregler 25 zugeführt. Der im Regler 25 eingesetzte Regelungsalgorithmus verwendet vorzugsweise einen nicht linearen Integralregler.

Das Koordinationsmodul 23 sorgt für eine Koordination der Funktionen des Luftmassenstromreglers 22 und des Ansaugdruckreglers 25. Der Ausgangswert dieses Koordinationsmoduls ist der vorgegebene Ansaugdruck $MAP_{mod}$, welcher dem Summierer 24 zugeführt und dort in der vorstehend beschriebenen Weise verarbeitet wird.

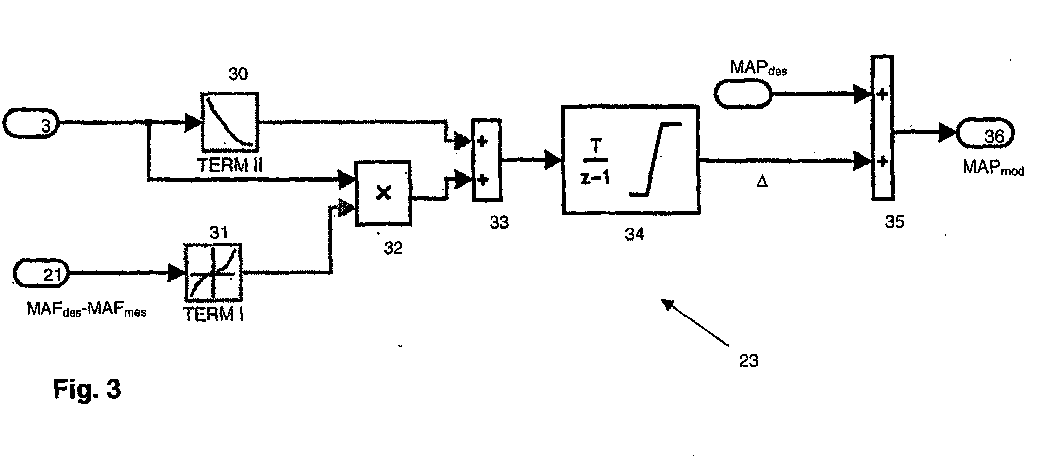

Der Aufbau des Koordinationsmoduls 23 ist in Figur 3 genauer dargestellt. Der in Block 36 von dem Koordinationsmodul abgegebene Wert $MAP_{mod}$ besteht demnach aus einer in Block 35 gebildeten Summe. Der erste Summand ist dabei der Basisansaugdruck $MAP_{des}$, der in an sich bekannter Weise von der Motorsteuerung berechnet wird. Der zweite Summand in Block 35 besteht aus einer Druckkorrektur $\Delta$, welche durch den Ausgangswert eines Integrationsblockes 34 gebildet wird. Im Block 34 wird vorzugsweise eine zeitdiskrete Integration vorgenommen.

Das in Block 34 integrierte Signal ist wiederum eine in Block 33 gebildete Summe zweier Einzelwerte.

Der erste Summand wird mit Hilfe einer nichtlinearen Funktion 31 des Luftmassenstrom-Fehlers gebildet

$$(MAF_{des} - MAF_{mes}).$$

Der Ausgangswert dieser Funktion 31 wird in Block 32 mit der Position des Abgasrückführungsventils 3 multipliziert. Die Position wird zu diesem Zweck durch einen Wert zwischen 0 und 1 dargestellt, wobei 0 dem vollständig geschlossenen und 1 dem vollständig offenen Zustand des Ventils entspricht. Die Aufgabe des ersten Summanden des Blockes 33 besteht darin, den Wert des gewünschten Ansaugdruckes $MAP_{mod}$ zu verringern (höherer Abgasrückführungsfluss) für einen negativen Fehler im Luftmassenstrom (gemessener Wert ist größer als gewünschter Wert) und umgekehrt. Die Größe dieses Terms sollte proportional zur Position des Abgasrückführungsventils sein, um die Tatsache widerzuspiegeln, dass der Einlassfluss gedrosselt werden muss (niedrigerer Ansaugdruckwert), wenn das Abgasrückführungsventil vollständig offen ist und der Luftmassenstromfehler noch negativ ist, um einen höheren Fluss des rückgeführten Abgases zu induzieren.

Der zweite Summand in Block 33 ist eine monoton fallende Funktion der Position des Abgasrückführungsventils, die für die vollständig offene Position gleich Null ist. Zum Beispiel kann dieser Summand eine quadratische Funktion der Position des Abgasrückführungsventils sein. Die Aufgabe des zweiten Summanden in Block 33 besteht darin, das Abgasrückführungsventil kontinuierlich in Öffnungsrichtung zu treiben, solange die vollständig offene Position noch nicht erreicht ist. Dies wird indirekt durch Erhöhung des vorgegebenen Wertes des Ansaugdruckes $MAP_{mod}$ erreicht, was eine weitere Öffnung des Einlassdrosselventils und eine weitere Öffnung des Abgasrückführungsventils zur Folge hat, um die gewünschte Einstellung für den Luftmassenstrom zu erzielen.

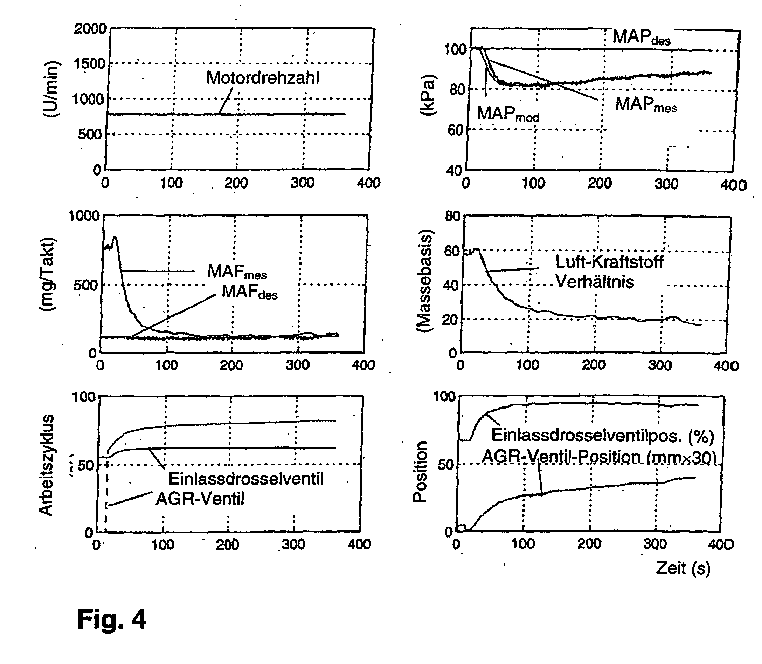

In Figur 4 sind die Ergebnisse bei Durchführung des oben dargestellten Regelungsalgorithmus dargestellt. Die dargestellten Daten sind dabei das Ergebnis von Versuchen an einem 3,0 Liter Motor. Die Diagramme von Figur 4 zeigen verschiedene Größen des Regelungsprozesses im zeitlichen Verlauf des Versuches. Der Motor wurde im Geschwindigkeitsregelungsmodus im Leerlauf betrieben. Der Leerlaufdrehzahlregler war in der Lage, den Referenzwert von 775 U/min nachzuregeln. Der gewünschte Wert des Ansaugdruckkes wurde auf 100 kPa festgesetzt.

Zum Zeitpunkt t = 14 s wurden der Luftmassenstromregler 20 und das Koordinationsmodul 23 aktiviert, um eine Unterbrechung der Regeneration eines Partikelfilters zu simulieren. Das angestrebte Luft-Kraftstoff-Verhältnis wurde auf den Wert 20 (auf einer Massenbasis) gesetzt.

Im Ergebnis ist erkennbar, dass der Arbeitszyklus (duty cycle) des Abgasrückführungsventils sofort auf 50% gesetzt wird, und dass die Vorgabe des gewünschten Ansaugdruckes von ihrem ursprünglichen Wert von 100 kPa herabgesetzt wird. Dies erfolgt aufgrund der Wirkung des ersten Terms (aus Block 31 von Figur 3) des Koordinationsmoduls 23, welcher durch den großen negativen Luftmassenstromfehler beeinflusst wird. An diesem Punkt ist der Einfluss des zweiten Terms (aus Block 30 von Figur 3) des Koordinationsmoduls 23 klein, und das Einlassdrosselventil bleibt geschlossen, solange der Fehler im Luftmassenstrom groß ist.

Bei t = 100 sek. hat der Luftmassenstromfehler hinreichend abgenommen und der zweite Term des Koordinationsmoduls 23 hat eine schrittweise Erhöhung des gewünschten Ansaugdruckwertes bewirkt, wodurch eine weitere Öffnung des Abgasrückführungsventils und eine Reduktion der Einlassdrosselung bewirkt wird. Die implementierte koordinierte Regelungsaktion ist somit in der Lage, den gesetzten Grenzwert des Luft-Kraftstoff-Verhältnisses während des durchgeführten Tests effizient zu verfolgen.

**Patentansprüche**

1. Verfahren zur Unterbrechung der Regeneration eines Partikelfilters (10) im Abgassystem eines Verbrennungsmotors, insbesondere eines Dieselmotors (5), wobei der Luftmassenstrom (MAF) und der Ansaugdruck (MAP) sensorisch erfasst und durch Betätigung eines Einlassdrosselventils (2) und/ oder eines Abgasrückführungsventils (3) verändert werden,
   **dadurch gekennzeichnet, dass**

   a) das Abgasrückführungsventil (3) so geregelt wird, dass ein vorgegebener Luftmassenstrom ($MAF_{des}$) eingestellt wird

   b) das Einlassdrosselventil (2) so geregelt wird, dass ein vorgegebener Ansaugdruck ($MAP_{mod}$) verfolgt wird, und

   c) der vorgegebene Ansaugdruck ($MAP_{mod}$) die Summe des von der Motorsteuerung berechneten Basisansaugdrucks ($MAP_{des}$) und einer Druckkorrektur ($\Delta$) darstellt, wobei die Druckkorrektur von der Differenz zwischen vorgegebenem Luftmassenstrom ($MAF_{des}$) und gemessenem Luftmassenstrom ($MAF_{mes}$) abhängt.

2. Verfahren nach Anspruch 1,
   **dadurch gekennzeichnet, dass** die Unterbrechung der Regeneration bei Überschreiten einer vorgegebenen Temperaturschwelle im Partikelfilter ausgeführt wird.

3. Verfahren nach einem der Ansprüche 1 oder 2, **dadurch gekennzeichnet, dass** der vorgegebene Luftmassenstrom ($MAF_{des}$) in Schritt a) in Abhängigkeit von der Motordrehzahl (n), der Kraftstoffzufuhr ($F_q$) und dem gewünschten Luft-Kraftstoff-Verhältnis ($A/F_{des}$) berechnet wird.

4. Verfahren nach einem der Ansprüche 1 bis 3, **dadurch gekennzeichnet, dass** die Stellsignale für das Abgasrückführungsventil (3) in Schritt a) aus der Differenz zwischen dem vorgegebenen Luftmassenstrom ($MAF_{des}$) und dem gemessenen Luftmassenstrom ($MAF_{mes}$) berechnet werden.

5. Verfahren nach Anspruch 4, **dadurch gekennzeichnet, dass** die Berechnung der Stellsignale für das Abgasrückführungsventil (3) durch eine Integralregelung (22) erfolgt.

6. Verfahren nach einem der Ansprüche 1 bis 5, **dadurch gekennzeichnet, dass** die Stellsignale für das Einlassdrosselventil (2) in Schritt b) aus der Differenz zwischen dem vorgegebenen Ansaugdruck ($MAP_{mod}$) und dem gemessenen Ansaugdruck ($MAP_{mes}$) berechnet werden.

7. Verfahren nach Anspruch 6, **dadurch gekennzeichnet, dass** die Berechnung der Stellsignale für das Einlassdrosselventil (2) durch eine Integralregelung (25) erfolgt.

8. Verfahren nach einem der Ansprüche 1 bis 7, **dadurch gekennzeichnet, dass** die Druckkorrektur ($\Delta$) das zeitliche Integral (34) einer monoton steigenden, vorzugsweise nichtlinearen Funktion (31) der Differenz zwischen vorgegebenem Luftmassenstrom ($MAF_{des}$) und gemessenem Luftmassenstrom ($MAF_{mes}$) enthält.

9. Verfahren nach Anspruch 8, **dadurch gekennzeichnet, dass** die Funktion (31) vor der Integration mit einem dem Öffnungsgrad des Abgasrückführungsventils (3) proportionalen Faktor multipliziert wird.

10. Verfahren nach einem der Ansprüche 1 bis 9, **dadurch gekennzeichnet, dass** die Druckkorrektur ($\Delta$) das zeitliche Integral (34) einer monoton auf den Wert Null fallenden Funktion (30) eines dem Öffnungsgrad des Abgasrückführungsventils (3) proportionalen Faktors enthält.

11. Regelungsanordnung zur Unterbrechung der Regeneration eines Partikelfilters (10) im Abgassystem eines Dieselmotors (5) mit einem Luftmassenstromsensor (11), mit einem Ansaugdrucksensor (12), mit einem Einlassdrosselventil (2) in der Frischluftzufuhr zum Dieselmotor und mit einem Abgasrückführungsventil (3), **dadurch gekennzeichnet, dass**

a) ein Luftmassenstromregler (22) zur Verfolgung eines vorgegebenen Luftmassenstroms ($MAF_{des}$) enthalten ist, der ausgangsseitig mit dem Abgasrückführungsventil (3) gekoppelt ist;
b) ein Ansaugdruckregler (25) zur Verfolgung eines vorgegebenen Ansaugdruckes ($MAP_{mod}$) enthalten ist, der ausgangsseitig mit dem Einlassdrosselventil (2) gekoppelt ist;
c) ein Koordinationsmodul (23) enthalten ist, welches den vorgegebenen Ansaugdruck ($MAP_{mod}$) für den Ansaugdruckregler (25) als Summe des von der Motorsteuerung berechneten Basisansaugdrucks ($MAP_{des}$) und einer Druckkorrektur ($\Delta$) berechnet, wobei die Druckkorrektur von der Differenz zwischen vorgegebenem Luftmassenstrom ($MAF_{des}$) und gemessenem Luftmassenstrom ($MAF_{mes}$) abhängt.

**Claims**

1. A method for interrupting the regeneration of a particle filter (10) in the exhaust system of an internal combustion engine, in particular of a diesel engine (5), the air mass flow rate (MAF) and the intake pressure (MAP) being determined by means of sensors and modified by activating an inlet throttle valve (2) and/or an exhaust feedback valve (3), wherein

a) the exhaust feedback valve (3) is regulated in such a way that a predefined air mass flow rate ($MAF_{des}$) is set,

b) the inlet throttle valve (2) is regulated in such a way that a predefined intake pressure ($MAP_{mod}$) is tracked, and

c) the predefined intake pressure ($MAP_{mod}$) constitutes the sum of the basic intake pressure ($MAP_{des}$) calculated by the engine controller and a pressure correction ($\Delta$), the spressure correction depending on the difference between the predefined air mass flow rate ($MAF_{des}$) and the measured air mass flow rate ($MAF_{mes}$).

2. The method as claimed in claim 1, wherein the interruption of the regeneration is carried out when a predefined temperature threshold in the particle filter is exceeded.

**3.** The method as claimed in one of claims 1 or 2, wherein the predefined air mass flow rate ($MAF_{des}$) is calculated in step a) as a function of the engine speed (n), the fuel supply ($F_q$) and the desired air-to-fuel ratio ($A/F_{des}$).

**4.** The method as claimed in one of claims 1 to 3, wherein the actuation signals for the exhaust feedback valve (3) are calculated in step a) from the difference between the predefined air mass flow rate ($MAF_{des}$) and the measured air mass flow rate ($MAF_{mes}$).

**5.** The method as claimed in claim 4, wherein the calculation of the actuation signals for the exhaust feedback valve (3) is carried out by means of an integral-action controller (22).

**6.** The method as claimed in one of claims 1 to 5, wherein the actuation signals for the inlet throttle valve (2) are calculated in step b) from the difference between the predefined intake pressure ($MAP_{mod}$) and the measured intake pressure ($MAP_{mes}$).

**7.** The method as claimed in claim 6, wherein the calculation of the actuation signals for the inlet throttle valve (2) is carried out by an integral-action controller (25).

**8.** The method as claimed in one of claims 1 to 7, wherein the pressure correction ($\Delta$) includes the time integral (34) of a monotonously rising, preferably nonlinear function (31) of the difference between a predefined air mass flow rate ($MAF_{des}$) and a measured air mass flow rate ($MAF_{mes}$).

**9.** The method as claimed in claim 8, wherein, before the integration, the function (31) is multiplied by a factor which is proportional to the degree of opening of the exhaust feedback valve (3).

**10.** The method as claimed in one of claims 1 to 9, wherein the pressure correction ($\Delta$) includes the time integral (34) of a function (30) of a factor which is proportional to the degree of opening of the exhaust feedback valve (3), said function (30) dropping monotonously to the value zero.

**11.** A control arrangement for interrupting the regeneration of a particle filter (10) in the exhaust system of a diesel engine (5) having an air mass flow rate sensor (11), having an intake pressure sensor (12), having an inlet throttle valve (2) in the fresh air supply to the diesel engine and having an exhaust feedback valve (3), wherein

a) an air mass flow rate controller (22) for tracking a predefined air mass flow rate ($MAF_{des}$) is included, which air mass flow rate controller (22) coupled at the output end to an exhaust feedback valve (3);

b) an intake pressure controller (25) for tracking a predefined intake pressure ($MAP_{mod}$) being included, which intake pressure controller (25) is to be coupled at the output end to an inlet throttle valve (2);

c) a coordination module (23) is included, which coordination module (23) calculates the predefined intake pressure ($MAP_{mod}$) for the intake pressure controller (25) as the sum of the basic intake pressure ($MAP_{des}$) calculated by the engine controller and a pressure correction ($\Delta$), the pressure correction depending on the difference between the predefined air mass flow rate ($MAF_{des}$) and the measured air mass flow orate ($MAF_{mes}$).

**Revendications**

**1.** Procédé destiné à interrompre la régénération d'un filtre à particules (10) dans le système de gaz d'échappement d'un moteur à combustion interne, en particulier d'un moteur diesel (5), le débit massique d'air (MAF) et la pression d'aspiration (MAP) étant détectés par des capteurs et étant modifiés par l'actionnement d'une soupape d'étranglement d'entrée (2) et/ou d'une soupape de recirculation de gaz d'échappement (3), **caractérisé en ce que**

a) la soupape de recirculation de gaz d'échappement (3) est régulée de telle sorte qu'un débit massique d'air prédéfini ($MAF_{des}$) soit ajusté,
b) la soupape d'étranglement d'entrée (2) est régulée de telle sorte qu'une pression d'aspiration prédéfinie ($MAP_{mod}$) soit poursuivie, et
c) la pression d'aspiration prédéfinie ($MAP_{mod}$) représente la somme de la pression d'aspiration de base ($MAP_{des}$) calculée par la commande du moteur et dune correction de pression ($\Delta$), la correction de pression dépendant de la différence entre le débit massique d'air prédéfini ($MAF_{des}$) et le débit massique d'air mesuré ($MAF_{mes}$).

**2.** Procédé selon la revendication 1, **caractérisé en ce que** l'interruption de la régénération est réalisée en cas de dépassement d'un seuil de température prédéfini dans le filtre à particules.

**3.** Procédé selon l'une quelconque des revendications 1 ou 2, **caractérisé en ce que** le débit massique d'air prédéfini ($MAF_{des}$) est calculé dans l'étape a) en fonction du régime du moteur (n), de l'alimentation en carburant ($F_q$) et du rapport aircarburant sbuhaité (A/$F_{des}$).

4. Procédé selon l'une quelconqué des revendications 1 à 3, **caractérisé en ce que** les signaux de réglage pour la soupape de recirculation de gaz d'échappement (3) sont calculés dans l'étape a) à partir de la différence entre le débit massique d'air prédéfini ($MAF_{des}$) et le débit massique d'air mesuré ($MAF_{mes}$).

5. Procédé selon la revéndication 4, **caractérisé en ce que** le calcul des signaux de réglage pour la soupape de recirculation de gaz d'échappement (3) s'effectue par un contrôle par intégration (22).

6. Procédé selon l'une quelconque des revendications 1 à 5, **caractérisé en ce que** les signaux de réglage pour la soupape d'étranglement d'entrée (2) sont calculés dans l'étape b) à partir de la différence entre la pression d'aspiration prédéfinie ($MAP_{mod}$) et la pression d'aspiration mesurée ($MAP_{mes}$).

7. Procédé selon la revendication 6, **caractérisé en ce que** le calcul des signaux de réglage pour la soupape d'étranglement d'entrée (2) s'effectue par un contrôle par intégration (25).

8. Procédé selon l'une quelconque des revendications 1 à 7, **caractérisé en ce que** la correction de pression ($\Delta$) comprend l'intégrale dans le temps (34) d'une fonction croissante monotone, de préférence non linéaire (31), de la différence entre le débit massique d'air prédéfini ($MAF_{des}$) et le débit massique d'air mesuré ($MAF_{mes}$).

9. Procédé selon la revendication 8, **caractérisé en ce que** la fonction (31) est multipliée avant l'intégration par un facteur proportionnel au degré d'ouverture de la soupape de recirculation de gaz d'échappement (3).

10. Procédé selon l'une quelconque des revendications 1 à 9, **caractérisé en ce que** la correction de pression ($\Delta$) comprend l'intégrale dans le temps (34) d'une fonction (30) monotone décroissante jusqu'à zéro, d'un facteur proportionnel au degré d'ouverture de la soupape de recirculation de gaz d'échappement (3).

11. Agencement de régulation pour l'interruption de la régénération d'un filtre à particules (10) dans le système de gaz d'échappement d'un moteur diesel (5) avec un capteur du débit massique d'air (11), avec un capteur de la pression d'aspiration (12), avec une soupape d'étranglement d'entrée (2) dans l'alimentation en air frais pour le moteur diesel et avec une soupape de recirculation de gaz d'échappement (3), **caractérisé en ce que**

a) un régulateur de débit massique d'air (22) pour poursuivre un débit massique d'air prédéfini ($MAF_{des}$) est inclus, lequel est accouplé du côté de la sortie à une soupape de recirculation de gaz d'échappement (3) ;

b) un régulateur de pression d'aspiration (25) pour poursuivre une pression d'aspiration prédéfinie ($MAP_{mod}$) est inclus, lequel doit être accouplé du côté de la sortie à une soupape d'étranglement d'entrée (2) ;

c) un module de coordination (23) est inclus, lequel calcule la pression d'aspiration prédéfinie ($MAP_{mod}$) pour le régulateur de pression d'aspiration (25) sous forme de somme de la pression d'aspiration de base ($MAP_{des}$) calculée par la commande du moteur et d'une correction de pression ($\in$), la correction de pression dépendant de la différence entre le débit massique d'air prédéfini ($MAF_{des}$) et le débit massique d'air mesuré ($MAF_{mes}$).

**Fig. 1**

**Fig. 2**

Fig. 3

**Fig. 4**